# FASCICULE DE BREVET EUROPEEN

(11) **EP 1 213 522 B1**
(45) Date de publication et mention de la délivrance du brevet: **09.11.2005**
(21) Numéro de dépôt: 01403089.4
(22) Date de dépôt: 30.11.2001
(51) Int. Cl.: F16L 1/20, F16L 11/18, H01R 13/56

(54) **Limiteur de courbure notamment pour cable sous-marin**
Vorrichtung zum Begrenzen der Biegung insbesondere eines Unterseekabels
Device for limiting the curvature of a cable, especially for an underwater cable

(30) Priorité: 08.12.2000 FR 0015992
(43) Date de publication de la demande: 12.06.2002
(73) Titulaire: Thales, 75008 Paris (FR)
(72) Inventeur: Suppa, Vito, c/o Thales, Intellectual Property, 94117 Arcueil Cedex (FR); Coupeaud, Christophe, c/o Thales, Intel. Property, 94117 Arcueil Cedex (FR)
(74) Mandataire: Desperrier, Jean-Louis

(56) Documents cités:
- FR-A- 2 681 919
- FR-A- 2 739 167
- US-A- 4 703 135
- US-A- 4 716 604
- US-A- 4 739 801
- US-A- 6 148 921

## Description

La présente invention se rapporte aux dispositifs qui permettent de limiter la courbure de tout objet flexible linéaire, tel que par exemple un câble, pour éviter de l'endommager et en particulier pour éviter de le rompre. Elle s'applique plus particulièrement aux câbles sous-marins qui permettent de remorquer des corps immergés ou flottants derrière des bâtiments tracteurs. De tels câbles sont utilisés notamment pour la prospection pétrolière.

Il est connu pour faire de la prospection pétrolière d'utiliser, comme représenté sur la figure, une antenne linéaire acoustique 101 remorquée par un bateau tracteur 102. Pour cela l'antenne, qui est sensiblement horizontale, est reliée au bateau par un câble électrotracteur formé d'une partie lourde 103 accrochée au bateau et plongeant de manière inclinée dans la mer, et une partie légère 105 reliant cette partie lourde à l'antenne 101 en restant sensiblement dans l'alignement de cette antenne. Pour obtenir l'immersion voulue pour l'antenne, on utilise un dépresseur 106 fixé au point de raccordement entre la partie lourde 103 et la partie légère 105. Sous l'effet du poids de la partie lourde 103, et de la traînée hydrodynamique engendrée par le dépresseur 106, l'ensemble plonge au sein de la mer et se stabilise à une profondeur sensiblement constante, fonction de la vitesse du bateau remorqueur 102. La résistance de l'ensemble des éléments, en particulier du câble lourd 103, est étudiée pour résister aux efforts normaux de traction, y compris les à-coups éventuels provenant de l'état de la mer.

Pour changer rapidement de position, le bateau est amené à augmenter sensiblement sa vitesse. Pour ce faire on réenroule généralement l'ensemble des câbles et de l'antenne sur le tambour d'un treuil 104 avant d'effectuer cette manoeuvre. En pratique ceci n'est pas toujours possible. La traction exercée sur les câbles et l'antenne augmente alors de manière très importante avec la vitesse du bateau. On court alors des risques importants de cassure de l'un de ces éléments. Cette cassure s'effectue généralement au niveau du raccordement du câble lourd 103 et du câble léger 105, qui correspond à la fixation du dépresseur 106. Dans la pratique les éléments ainsi perdus ne sont pas récupérables et la perte encourue est extrêmement grande, en raison essentiellement du coût très important de l'antenne 101.

En principe, compte tenu des coefficients de sécurité utilisés dans les calculs mécaniques, les câbles pourraient très bien résister aux efforts de traction provenant d'une vitesse maximale du bateau.

Une analyse plus poussée des causes de rupture montre que celle-ci provient certes des efforts de traction, mais surtout de la fragilisation du câble provenant de la courbure excessive entraînée par l'action du dépresseur 106.

Ce résultat est général pour tous les câbles soumis à des efforts de traction et provient essentiellement des contraintes locales très importantes exercées sur la paroi extérieure du câble par l'action de la courbure et qui créent des fissures locales qui s'agrandissent ensuite pour provoquer une rupture totale.

On a imaginé différents dispositifs pour limiter la courbure des câbles Parmi ceux-ci on trouve en particulier des dispositifs obtenus par surmoulage avec un élastomère souple et inclusion éventuelle d'une armature métallique, des pièces cylindriques rigides qui sont enfilées sur le câble et aussi des coquilles demi-cylindriques clipsées sur ce même câble. Tous ces dispositifs présentent au moins l'un des inconvénients suivants, et souvent plusieurs :
- une limitation variable de la courbure, dont la valeur dépend essentiellement de la traction exercée sur le câble et de la raideur des matériaux utilisés, avec des valeurs locales pouvant quand même atteindre des valeurs excessives,
- une difficulté d'enroulement sur le touret en raison de l'augmentation de la raideur de l'ensemble entrainé par le dispositif anti-courbure,
- une dérive du rayon de courbure en fonction de l'évolution des caractéristiques des élastomères utilisés, selon les changements de température et le temps qui passe,
- une déformation irréversible du surmoulage, pouvant aller jusqu'à la rupture lorsque l'ensemble reste stocké de manière prolongée sur les tourets de rangement.
- des difficultés, voir une impossibilité, d'effectuer une reprise des efforts axiaux au niveau de ce surmoulage,
- l'impossibilité de démonter ce dispositif sans couper le câble,
- un incombrement manifestement trop important,
- un décalage de la fibre neutre par rapport à celle du câble d'origine, ce qui est nuisible aux organes internes dont les dimensionnements ont été calculés en fonction de la position de la fibre neutre d'origine,
- une difficulté à connaître, et donc à maîtriser, la masse de l'ensemble, ce qui perturbe le système dans le cas où les câbles sont pesés,
- la présence fréquente d'excroissances mécaniques qui risquent d'endommager les poulies ou le chomard nécessaire à la manoeuvre du câble sur le bateau.

On citera comme exemple de cet art antérieur le brevet n° 93 09105 déposé le 23.07.1993 par la société THOMSON-CSF, publié le 27.01.1995 sous le n° 2 708 074 et délivré le 01.09.1995.

Pour surmonter ces inconvénients, l'invention propose un dispositif limiteur de courbure, notamment pour câble sous-marin, formé d'un ensemble de pièces emboitées identiques (401, 402, 411 et 412), principalement caractérisé en ce que lesdites pièces_correspondent chacune au quart d'un cardan coupé en quatre et peuvent s'assembler par paires pour constituer un demi-cardan dont la cohésion mécanique est assurée par l'emboitement, sur les deux pièces constituant un demi-cardan, des deux pièces constituant le demi-cardan suivant

Selon une autre caractéristique, chaque pièce forme un demi-cylindre délimité par un plan de joint passant par l'axe de ce cylindre et comportant à une extrémité deux demi-tourillons alignés sur un axe perpendiculaire à l'axe du cylindre, et elle comporte à l'autre extrémité une chape percée d'un palier dont est perpendiculaire à l'axe des demi-tourillons et à l'axe du cylindre; ces demi-tourillons formant deux tourillons complets avec les demi-tourillons homologues d'une autre pièce lorsque deux de ces pièces sont réunies ensemble pour former une paire, et ces tourillons étant adaptés pour venir s'insérer dans les paliers d'une paire adjacente du limiteur assemblé.

Selon une autre caractéristique, chaque pièce est usinée de manière à présenter une première surface inclinée située du coté des demi-tourillons, et dont la surface est parallèle à l'axe de ces deux demi-tourillons, et une deuxième surface inclinée dont la surface est parallèle à l'axe du palier; ces surfaces étant disposées de manière à ce que la première surface d'une pièce viennent rencontrer la deuxième surface de la paire de pièce adjacente lorsque ces pièces sont assemblées et qu'elles pivotent réciproquement l'une par rapport à l'autre, de manière à limiter ce pivotement à la valeur prescrite pour limiter la courbure du câble sur lequel les pièces sont assemblées.

Selon une autre caractéristique les pièces identiques sont réalisées dans des matériaux différents de manière à obtenir une résistance plus importante là où les efforts sont les plus forts et un poids plus faible là où les efforts sont les plus faibles.

D'autres particularités et avantages de l'invention apparaîtront clairement dans la description suivante, présentée à titre d'exemple non limitatif en regard des figures annexées qui représentent :

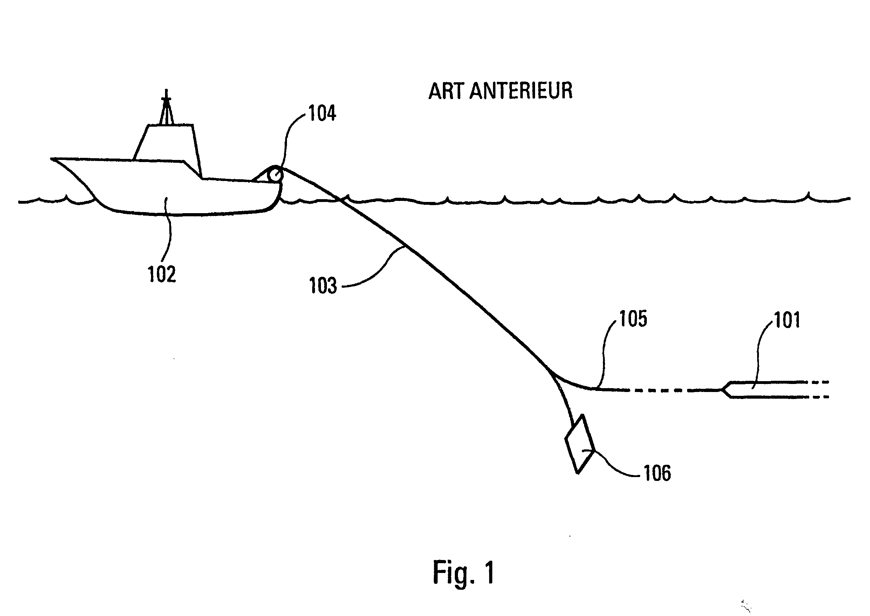

- La figure 1, le schéma d'une antenne linéaire remorquée par un bateau à l'aide d'un câble, selon l'art antérieur;
- La figure 2, une vue en coupe d'un câble muni d'un limiteur de courbure selon l'invention; et
- La figure 3, une vue en perspective cavalière selon deux axes de vision des organes élementaires formant ce limiteur.

L'invention propose d'utiliser un ensemble de pièces de forme identique correspondant en fait chacune au quart d'un cardan coupé en quatre.

Pour armer le câble, on commence par placer sur celui-ci deux de ces pièces qui viennent l'encercler pour former la moitié d'un cardan. On place ensuite deux autres de ces pièces de la même manière sur le câble en les faisant tourner d'un quart de tour et en venant emprisonner dans deux paliers portés par ces pièces deux tourillons portés par les deux premières.

On continue ainsi de suite en suite pour former une colonne articulée qui peut se courber dans tous les sens avec un rayon de courbure limité connu par avance. Ceci permet de protéger le câble contre les risques de dégradations dues à une courbure excessive.

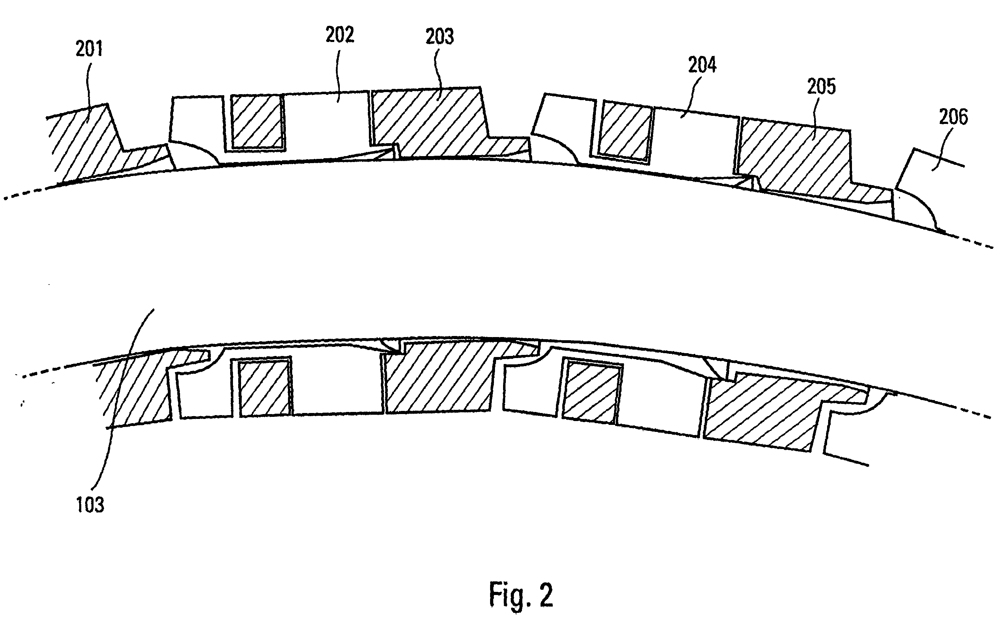

Cet ensemble est représenté en coupe sur la figure 2 où l'on voit le câble 103 armé avec les pièces 201 à 206 qui sont toutes identiques et décalés d'un quart de tour à l'une à la suivante. Sur cette figure, les pièces de rang impair ont été hachurées pour les distinguer des pièces de rang pair.

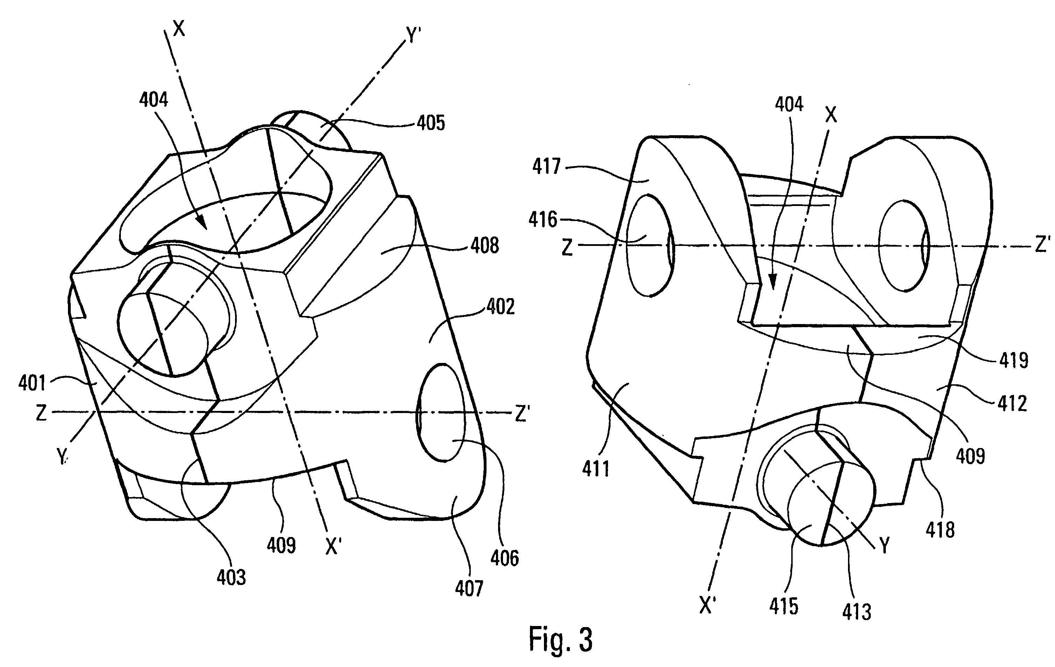

Quatre de ces pièces ont été représentées en perspective cavalière sur la figure 3, assemblées par paires, mais les deux paires étant séparées et représentées selon deux angles différents, de manière à bien faire ressortir comment elles s'articulent les unes sur les autres.

La première paire comprend les pièces 401 et 402, et la deuxième paire les pièces 411 et 412.

Chacune de ces paires assemblées forme un cylindre creux coupé en deux par des plans de joint respectivement 403 et 413. L'axe XX' du cylindre formé par ces pièces, et qui sera lui-même sensiblement l'axe du câble 103 sur lequel ces pièces seront refermées est contenu dans les plans de joint 403 et 413.

Ces pièces sont évidées de manière à ce que le cylindre creux qu'elles forment lorsqu'elles sont assemblées délimite un trou central axial 404 dans lequel sera logé le câble 103.

Ces pièces sont usinées de manière à présenter à l'une des extrémités du cylindre formé par les paires deux demi-tourillons 405 et 415 ayant la forme d'un demi-cylindre coupé axialement par les plans de joint 403 et 413. Lorsque les pièces sont réunies pour former des paires, on obtient ainsi à l'une des extrémités de ces paires deux tourillons complets situés de part et d'autre de la paire et dont l'axe YY' est perpendiculaire à l'axe XX'.

De manière symétrique on a usiné à l'autre extrémité des pièces des trous 406 et 416 qui se font face dans chaque paire de manière à former pour chaque paire, deux paliers situés sur un axe ZZ' perpendiculaire à l'axe XX' et à l'axe YY'.

En outre les pièces sont usinées de manière à ce que leurs extrémités portant les paliers 406 et 416 forment des chapes 407 et 417 dans lesquelles sont percés ces paliers 406 et 416.

De manière symétrique, les autres extrémités sont usinées pour que les tourillons 405 et 415 soient situés dans le volume constitué par les génératrices extérieures du cylindre, ici virtuel, correspondant à la surface extérieure des paires de pièces.

De cette manière, et comme on le voit sur la figure, ces usinages permettent de loger les tourillons dans les paliers pour qu'une paire de pièce puisse tourner vis à vis de l'autre par rotation des tourillons dans les paliers, l'axe YY' d'une paire étant alors confondu avec l'axe ZZ' de la suivante.

Les diamètres des tourillons sont adaptés aux diamètres des paliers.

Ce mouvement de rotation permet donc bien au câble 103, qui est situé dans le trou central 404 de cet ensemble, avec un certain jeu, de se courber en entraînant la rotation des paires de pièces les unes par rapport aux autres.

Pour limiter alors la courbure du câble, l'usinage des pièces, qui permet le débattement d'une paire par rapport à l'autre, est effectué de telle manière que chaque pièce comporte du côté des tourillons un dégagement limité par une surface en forme de plan 408 incliné vers l'extérieur et dont la surface est parallèle à l'axe YY'.

De manière symétrique, l'usinage des pièces qui permet de dégager les chapes comportant les paliers est effectué de manière à obtenir des surfaces 409 et 419 en forme de plan 409/419 incliné vers l'extérieur et dont la surface est parallèle à l'axe ZZ'. Alors que les surfaces 408 et 418 sont d'un seul tenant, puisqu'elles appartiennent à une seule pièce, les surfaces 409/419 forment des parties coplanaires qui sont réunies en une seule au moment de l'assemblage des pièces pour former une paire.

De cette manière, lorsque deux paires réunies par les tourillons et les paliers pivotent respectivement l'une par rapport à l'autre, ce mouvement est limité par les surfaces 408,418, et 409, 419 qui viennent empêcher la rotation, lorsque par exemple une surface 408 vient au contact d'une surface 409/ 419. L'usinage de ces surfaces est effectué de telle manière que lorsqu'elles viennent en contact, les plans des deux surfaces soient sensiblement confondus, ce qui permet de limiter les efforts à ce niveau. C'est pour cette raison qu'elles sont inclinées vers l'extérieur des pièces.

En outre la position de ces surfaces est déterminée de telle manière que, lorsque la rotation est maximale, l'ensemble ne présente pas de point saillant à l'extérieur de la courbe formant l'enveloppe de l'ensemble du dispositif. De cette manière on ne risque pas de détériorer les organes, tels que les poulies, le chomard ou le dispositif de trancanage, sur lesquel le câble muni de cette armature viendra coulisser.

On constate que chaque paire de pièce est verrouillée par la suivante au niveau des paliers, qui sont monoblocs et qui viennent verrouiller les tourillons formés de deux parties distinctes ne formant un tourillon véritable que lorsqu'elles sont réunies. De cette manière il n'y a pas besoin de prévoir de moyens de fixation complémentaire au niveau des paires de pièces, sauf pour la dernière de l'assemblage car il n'y a pas de paire suivante pour la maintenir. On bloquera alors cette dernière par des moyens appropriés, par exemple par des brides venant enserrer les tourillons de celles-ci, qui ne sont pas fonctionnels. Ceci assure alors la tenue mécanique et la cohésion de l'ensemble.

Compte tenu de la forme massive de ces pièces individuelles, il est facile de les dimensionner de telle manière que les tourillons et les paliers permettent de supporter tous les efforts mécaniques constitués essentiellement d'efforts de traction, mais qui comportent également des composantes de torsion et de flexion, voir dans certains cas de compression.

La protection apportée par le dispositif selon l'invention contre les effets néfastes dus à la flexion est ainsi complétée par une protection provenant de la reprise des efforts au niveau de ce dispositif.

Ces pièces, qui sont identiques, pourront être réalisées dans des matériaux essentiellement rigides, tels que l'acier, le bronze ou des alliages d'aluminium/titane pour les applications habituelles.

Dans les cas où on souhaitera limiter le surpoids engendré par le dispositif selon l'invention, on pourra utiliser des matériaux plus légers, tels par exemple des matières plastique chargées ou non.

En outre on pourra très bien panacher des pièces de dimensions identiques mais réalisées avec des matériaux différents, de manière à optimiser localement ce dispositif, en plaçant par exemple des pièces en acier près de la jonction, là où les efforts sont les plus importants, et des pièces en plastiques à l'autre extrémité pour alléger l'ensemble du dispositif.

On constate enfin que l'articulation entre les différentes paires de pièces est par conception confondue avec l'axe du câble, ce qui permet de garder la ligne neutre de celui-ci et en outre permet de ne pas avoir de glissement longitudinal relatif entre le dispositif de l'invention et le câble lorsque l'on enroule l'ensemble sur le touret du treuil.

L'invention est particulièrement avantageuse en ce qu'elle permet de n'utiliser qu'un seul type de pièce pour former l'ensemble du limiteur de courbure. En outre la mise en place et le démontage de ce limiteur sont particulièrement faciles et ne nécessitent pas de couper l'extrémité du câble. Enfin, la limitation du rayon de courbure se fait de manière totalement mécanique par des butées franches.

## Revendications

1. Limiteur de courbure, notamment pour câble sous-marin, formé d'un ensemble de pièces emboitées identiques (401, 402, 411 et 412), **caractérisé en ce que** lesdites pièces correspondent chacune au quart d'un cardan coupé en quatre et peuvent s'assembler par paires pour constituer un demi-cardan dont la cohésion mécanique est assurée par le simple emboitement, sur les deux pièces constituant un demi-cardan, des deux pièces constituant le demi-cardan suivant.

2. Limiteur selon la revendication 1, **caractérisé en ce que** chaque pièce forme un demi-cylindre délimité par un plan de joint (403) passant par l'axe de ce cylindre et comportant à une extrémité deux demi-tourillons (405) alignés sur un axe (YY') perpendiculaire à l'axe du cylindre (XX'), et qu'elle comporte à l'autre extrémité une chape (407) percée d'un palier (406) dont l'axe (ZZ') est perpendiculaire à l'axe des demi-tourillons et à l'axe du cylindre; ces demi-tourillons formant deux tourillons complets avec les demi-tourillons homologues d'une autre pièce lorsque deux de ces pièces sont réunies ensemble pour former une paire, et ces tourillons étant adaptés pour venir s'insérer dans les paliers d'une paire adjacente du limiteur assemblé.

3. Limiteur selon la revendication 2, **caractérisé en ce que** chaque pièce est usinée de manière à présenter une première surface inclinée (408) située du coté des demi-tourillons, et dont la surface est parallèle à l'axe de ces deux demi-tourillons, et une deuxième surface inclinée (409) dont la surface est parallèle à l'axe du palier (406); ces surfaces étant disposées de manière à ce que la première surface d'une pièce viennent rencontrer la deuxième surface de la paire de pièce adjacente lorsque ces pièces sont assemblées et qu'elles pivotent réciproquement l'une par rapport à l'autre, de manière à limiter ce pivotement à la valeur prescrite pour limiter la courbure du câble sur lequel les pièces sont assemblées.

4. Dispositif selon l'une quelconque des revendications 1 à 3, **caractérisé en ce que** les pièces identiques sont réalisées dans des matériaux différents de manière à obtenir une résistance plus importante là où les efforts sont les plus forts et un poids plus faible là où les efforts sont les plus faibles.

## Patentansprüche

1. Vorrichtung zur Begrenzung der Biegung, insbesondere für ein Unterseekabel, gebildet von einer Einheit von identischen ineinander gesteckten Teilen (401, 402, 411 und 412), **dadurch gekennzeichnet, dass** die Teile jeweils einem Viertel eines viergeteilten Kardangelenks entsprechen und paarweise zusammengesetzt werden können, um ein halbes Kardangelenk zu bilden, dessen mechanischer Zusammenhalt durch einfaches Stecken der beiden das folgende halbe Kardangelenk bildenden Teile auf die beiden ein halbes Kardangelenk bildenden Teile gewährleistet ist.

2. Begrenzungsvorrichtung nach Anspruch 1, **dadurch gekennzeichnet, dass** jeder Teil einen halben Zylinder bildet, der durch eine Verbindungsebene (403) begrenzt ist, die durch die Achse dieses Zylinders verläuft und an einem Ende zwei halbe Drehzapfen (405) umfasst, die auf einer Achse (YY') senkrecht auf die Achse des Zylinders (XX') ausgerichtet sind, und dass er am anderen Ende eine Abdeckung (407) umfasst, durch die eine Lagerung (406) gebohrt ist, deren Achse (ZZ') auf die Achse der halben Drehzapfen und auf die Achse des Zylinders senkrecht steht; wobei diese halben Drehzapfen zwei ganze Drehzapfen mit den gleichartigen halben Drehzapfen eines weiteren Teils bilden, wenn beide dieser Teile zusammengefügt werden, um ein Paar zu bilden, und wobei diese Drehzapfen derart ausgeführt sind, dass sie sich in die Lager eines angrenzenden Paars einer zusammengebauten Begrenzungsvorrichtung einfügen.

3. Begrenzungsvorrichtung nach Anspruch 2, **dadurch gekennzeichnet, dass** jeder Teil derart bearbeitet ist, dass er eine erste geneigte Fläche (408), die sich auf der Seite der halben Drehzapfen befindet und deren Fläche parallel zur Achse dieser beiden halben Drehzapfen ist, und eine zweite geneigte Fläche (409) aufweist, deren Fläche parallel zur Achse des Lagers (406) ist; wobei diese Flächen derart angeordnet sind, dass die erste Fläche eines Teils auf die zweite Fläche des Paars des angrenzenden Teils trifft, wenn diese Teile zusammengefügt sind, und dass sie umgekehrt zueinander schwenken, um dieses Schwenken auf den vorgeschriebenen Wert zu begrenzen, um die Biegung des Kabels, auf dem die Teile zusammengefügt sind, zu begrenzen.

4. Vorrichtung nach einem der Ansprüche 1 bis 3, **dadurch gekennzeichnet, dass** die identischen Teile aus unterschiedlichen Materialien hergestellt sind, um eine größere Festigkeit dort, wo die Kräfte am stärksten sind, und ein geringeres Gewicht dort, wo die Kräfte am geringsten sind, zu erzielen.

## Claims

1. Bending limiter, especially for a submarine cable, formed from an assembly of identical interlocked parts (401, 402, 411 and 412), **characterized in that** the said parts each correspond to one quarter of a universal joint cut into four and are able to be assembled in pairs to form a half-universal joint, the mechanical cohesion of which is provided by the simple interlocking, into the two parts constituting one half-universal joint, of the two parts constituting the next half-universal joint.

2. Limiter according to Claim 1, **characterized in that** each part forms a semicylinder bounded by a parting line (403) passing through the axis of this cylinder and having, at one end, two half-journals (405) aligned along an axis (YY') perpendicular to the axis (XX') of the cylinder and **in that** it includes, at the other end, a yoke (407) pierced by a bearing (406), the axis (ZZ') of which is perpendicular to the axis of the half-journals and to the axis of the cylinder, these half-journals forming two complete journals with the homologous half-journals of another part when two of these parts are joined together to form a pair, and these journals being designed to be inserted into the bearings of an adjacent pair of the assembled limiter.

3. Limiter according to Claim 2, **characterized in that** each part is machined so as to have a first inclined surface (408) located on the side facing the half-journals, and the surface of which is parallel to the axis of these two half-journals, and a second inclined surface (409), the surface of which is parallel to the axis of the bearing (406), these surfaces being placed in such a way that the first surface of a part encounters the second surface of the adjacent pair of parts when these parts are assembled and when they pivot reciprocally with respect to each other, so as to limit this pivoting to the value prescribed for limiting the bending of the cable on which the parts are assembled.

4. Device according to any one of Claims 1 to 3, **characterized in that** the identical parts are produced in different materials so as to obtain a greater strength at the point where the forces are highest and a lower weight at the point where the forces are lowest.
